(19) Europäisches Patentamt
European Patent Office
Office européen des brevets

(11) **EP 4 202 869 A1**

(12) **EUROPEAN PATENT APPLICATION**

(43) Date of publication:
**28.06.2023 Bulletin 2023/26**

(21) Application number: **21216738.1**

(22) Date of filing: **22.12.2021**

(51) International Patent Classification (IPC):
***G06V 40/19*** *(2022.01)* ***G06V 10/82*** *(2022.01)*

(52) Cooperative Patent Classification (CPC):
**G06V 40/19; G06V 10/82**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**KH MA MD TN**<br><br>(71) Applicant: **Carl Zeiss Vision International GmbH 73430 Aalen (DE)** | (72) Inventors:<br>• **Urban, Steffen**<br>  **07749 Jena (DE)**<br>• **Zhang, Min**<br>  **89231 Neu-Ulm (DE)**<br><br>(74) Representative: **Altmann Stößel Dick Patentanwälte PartG mbB Theodor-Heuss-Anlage 2 68165 Mannheim (DE)** |

(54) **METHOD AND APPARATUS FOR DETERMINING AT LEAST ONE OPTICAL PARAMETER OF AT LEAST ONE SPECTACLE LENS**

(57) The present invention relates to a computer-implemented method for a training of a computer-implemented method for determining at least one optical parameter (140) of at least one spectacle lens (114), wherein the method comprises a procedure (200) for determining a deviation between the at least one recorded data set (252) comprising information about the at least one modified feature (132) and at least one reference data set (254) comprising information about the at least one original feature (130), wherein the process uses at least one machine learning algorithm (220) configured to combine the information about the at least one original feature (130) and the information about the at least one modified feature (132).

Further, the present invention relates to a data determining apparatus for determining at least one optical parameter (140) of at least one spectacle lens (114), wherein the data determining apparatus is configured to carry out a computer-implemented method for determining at least one optical parameter (140) of at least one spectacle lens (114).

The present invention has the advantages of a more efficient and more reliable approach for determining the at least one optical parameter.

Fig. 2

**Description**

Field of the invention

The present invention relates to a computer-implemented method for a training of a computer-implemented method for determining at least one optical parameter of at least one spectacle lens, a computer-implemented method for determining at least one optical parameter of at least one spectacle lens, a data training apparatus for a training of a process for determining at least one optical parameter of at least one spectacle lens, a data determining apparatus for determining at least one optical parameter of at least one spectacle lens, a computer program, a trained machine-learning model, a use of a carrier element, and a method for producing at least one spectacle lens.

Related art

WO 2017/174 791 A1 discloses a method and a device for measuring the topography and/or the gradients and/or the curvature of an optically active surface of an object. The device allows the object to be arranged in a receiving region having a contact surface for contact with the object. Inside the device, there is a plurality of point light sources that provide light which is reflected at the surface to be measured of an object arranged in the receiving region. The device comprises at least one camera having an objective assembly and an image sensor for detecting a brightness distribution which is produced on a light sensor by the light of the point light sources reflected at the surface to be measured.

The publication "Superglue: Learning feature matching with graph neural networks" from Sarlin, Paul-Edouard, et al., which was published in "Proceedings of the IEEE/CVF conference on computer vision and pattern recognition" in 2020, introduces SuperGlue, a neural network that matches two sets of local features by jointly finding correspondences and rejecting non-matchable points. Assignments are estimated by solving a differentiable optimal transport problem, whose costs are predicted by a graph neural network. They introduce a flexible context aggregation mechanism based on attention, enabling SuperGlue to reason about the underlying 3D scene and feature assignments jointly. Compared to traditional, hand-designed heuristics, this technique learns priors over geometric transformations and regularities of the 3D world through end-to-end training from image pairs. The proposed method performs matching in real-time on a modern GPU and can be readily integrated into modern SfM or SLAM systems.

The publication "A comprehensive survey on graph neural networks." by Wu, Zonghan, et al. published in "IEEE transactions on neural networks and learning systems" in 2020, provides a comprehensive overview of graph neural networks (GNNs) in data mining and machine learning fields. They propose a new taxonomy to divide the state-of-the-art graph neural networks into four categories, namely recurrent graph neural networks, convolutional graph neural networks, graph autoencoders, and spatial-temporal graph neural networks. They further discuss the applications of graph neural networks across various domains and summarize the open source codes, benchmark data sets, and model evaluation of graph neural networks.

In addition, the publication "Attention is all you need." of Vaswani, Ashish, et al., available via arXiv: 1706.03762 , published 2017, describes that dominant sequence transduction models are based on complex recurrent or convolutional neural networks that include an encoder and a decoder. The best performing models also connect the encoder and decoder through an attention mechanism. They propose a new simple network architecture, the Transformer, based solely on attention mechanisms, dispensing with recurrence and convolutions entirely. Experiments on two machine translation tasks show these models to be superior in quality while being more parallelizable and requiring significantly less time to train.

WO 2020/216 788 A1 discloses a method, a device, and a computer program for determining at least one optical parameter of a spectacle lens, and to a method for manufacturing the spectacle lens using said at least one optical parameter, wherein the optical parameter denotes a value for a property of the spectacle lens which is adjusted during manufacture of the spectacle lens in order to achieve an intended correction of the refractive error of at least one eye of a user of the spectacle lens. The method comprises the following steps: a) capturing at least one image using the spectacle lens; and b) determining at least one optical parameter of the spectacle lens by image processing the at least one image, wherein the at least one image comprises an eye portion including at least one eye and/or a face portion adjacent to at least one eye of a user of the spectacle lens. In particular, the determination of the at least one optical parameter of the spectacle lens is carried out by using a classification or regression of at least one image statistics parameter using a machine learning method, in particular a neural network, wherein before step b) a training of the neural network takes place, whereby a trained neural network is obtained, wherein a plurality of training data sets is used for training the neural network, each training data set comprising a pair of at least one image and at least one comparison image, and at least one associated optical parameter of the lens or at least one optical effect related to the lens said spectacle lens.

Problem to be solved

It is therefore an objective of the present invention, in particular in view of WO 2020/216 788 A1, to provide a computer-implemented method for a training of a computer-implemented method for determining at least one optical parameter of at least one spectacle lens, a computer-implemented method for determining at least one optical parameter of at least one spectacle lens, a data training apparatus for a training of a process for determining at least one optical parameter of at least one spectacle lens, a data determining apparatus for determining at least one optical parameter of at least one spectacle lens, a computer program, a trained machine-learning model, a use of a carrier element and a method for producing at least one spectacle lens, which at least partially overcome the above-mentioned problems of the state of the art.

It is a particular objective of the present invention to provide a computer-implemented method for a training of a computer-implemented method for determining at least one optical parameter of at least one spectacle lens, a computer-implemented method for determining at least one optical parameter of at least one spectacle lens, a data training apparatus for a training of a process for determining at least one optical parameter of at least one spectacle lens, a data determining apparatus for determining at least one optical parameter of at least one spectacle lens, a computer program, a trained machine-learning model, a use of a carrier element and a method for producing at least one spectacle lens, which offer a more efficient and more reliable approach for determining the at least one optical parameter.

Summary of the invention

This problem is solved by a computer-implemented method for a training of a computer-implemented method for determining at least one optical parameter of at least one spectacle lens, a computer-implemented method for determining at least one optical parameter of at least one spectacle lens, a data training apparatus for a training of a process for determining at least one optical parameter of at least one spectacle lens, a data determining apparatus for determining at least one optical parameter of at least one spectacle lens, a computer program, a trained machine-learning model, use of a carrier element and a method for producing at least one spectacle lens having the features of the independent claims. Preferred embodiments, which can be implemented in an isolated fashion or in any arbitrary combination, are listed in the dependent claims or throughout the following description.

In a first aspect, the present invention relates to a computer-implemented method for a training of a computer-implemented method for determining at least one optical parameter of at least one spectacle lens, wherein the method comprises the steps of:

a) providing at least one recorded data set comprising information about the at least one modified feature received from at least one recorded image showing at least one part of the spectacle lens and at least one modified feature, wherein the at least one modified feature is generated from at least one original feature by a view through the at least one part of the spectacle lens, wherein at least one optical parameter of at the least one spectacle lens influences generating the at least one modified feature; and

b) using the at least one recorded data set as an input for a procedure for determining a deviation between the at least one recorded data set and at least one reference data set comprising information about the at least one original feature, wherein the procedure uses at least one machine learning algorithm configured to combine the information about the at least one original feature and the information about the at least one modified feature, wherein the at least one machine learning algorithm is trained by comparing the at least one modified feature to the at least one original feature or the at least one original feature to the at least one modified feature, whereby the at least one optical parameter of the at least one spectacle lens is determined in the procedure; and

c) repeating steps a) and b) until a difference between the at least one optical parameter as determined for the at least one spectacle lens and the at least one optical parameter as known for the at least one spectacle lens is below a threshold, whereby the procedure for determining the deviation between the at least one recorded data set and the at least one reference data set is obtained and applicable in the computer-implemented method for determining the at least one optical parameter of the at least one spectacle lens.

Herein, the indicated steps may, preferably, be performed in the given order, commencing with step a) and finishing with step c). However, any or all of the indicated steps may also be repeated several times and/or preformed concurrently in part. At least step b) and c) may be computer-implemented. Step a) may also be computer-implemented.

As generally used, the term "computer-implemented method" refers to a method which involves a programmable apparatus, in particular, a computer, a computer network, or a readable medium carrying a program, whereby at least one of the steps of the method, specifically at least one of steps b) and c), and optionally also step a), are performed by using at least d computer program. Alternatively, the at least one computer program may be accessible by an apparatus, which may be adapted for performing the method via a network, such as via an in-house network or via internet. With particular regard to the present invention, the present method can, thus, being performed on a programmable apparatus, which is configured for this purpose, such as by providing a computer program, which is configured for such a purpose.

As generally used, the term "training" refers to a process of determining parameters of an algorithm of a machine and deep learning model on the training data set. The training may comprise at least one optimization or tuning process, wherein a best parameter combination is determined. Because of the training, the procedure for determining a deviation may improve in such a way that the capability to determine the correct at least one optical value improves. In that sense the procedure is at least part of a machine learning model. For the purpose of the training, training data sets may be used. These training data sets may comprise real data or simulated data.

As generally used, the term "determine" or any grammatical variation thereof refers to a process of generating representative results which are, typically, denoted as "data". With particular regard to the present invention, the data comprise information, which are related to at least one optical parameter of a spectacle lens designated to correct at least one refractive error of at least one eye of a person. Instead of the term "person", a different term, such as "user", "subject", or "wearer", may also be applicable.

Based on standard ISO 13666:2019, also referred to herein as "Standard", the term "optical parameter" relates to at least one property of the at least one optical lens, preferably of the at least one spectacle lens, which is capable of altering the incident light beam through the at least one optical lens, preferably the at least one spectacle lens. As indicated above, the Standard, particularly Sections 3.10, 3.12 and 3.13, deals with optical parameters of spectacle lenses, in particular with regard to spherical and astigmatic properties of different kinds of spectacle lenses.

The term "spectacle lens" refers to an optical lens, which is used for determining and/or correcting a defective vision of a wearer of the optical lens, wherein the optical lens is carried in front of the eye of the user, thereby avoiding a direct contact with the eye of a user, according to the Standard, 3.5.2. For determining and/or correcting the defective vision of the wearer of the optical lens, the optical lens has a lens body which comprises a particular shape that is configured for this purpose. In general, the spectacle lens as used herein may be a unifocal lens having a single focal point. Further, term "pair of spectacle lenses" refers to a combination of a right spectacle lens which is configured to correct at least one refractive error of the right eye of a user and a left spectacle lens which is configured to correct at least one refractive error of the left eye of a user. Further, the term "spectacle" refers to an element which comprises a pair of spectacle lenses and a spectacle frame, wherein each spectacle lens is received by the spectacle frame.

According to step a), at least one recorded data set comprising information about the at least one modified feature received from at least one recorded image showing at least one part of the spectacle lens and at least one modified feature is provided. As generally used, the term "data set" refers to a collection of "data". The term "data" refers to an item, such as a numeric item, which comprises at least one piece of information. As used herein, the term "information" may refer to a content being comprised by the piece of data.

As used herein, the term "recorded image" refers to a picture or a photograph, in particular as taken by a camera. As generally used, the term "providing" or any grammatical variation thereof refers to receiving a data set for being available to a purpose, such as a further procedure. The data set may be provided on a data carrier, such as a disc or an USB flash drive; alternatively or in parallel, the data set my be provided in electronic form via email or a remote computer program receiving the data set to the procedure. The provided data set may be stored before it is inputted into the procedure, or alternatively or in parallel, the data set may be inputted directly into the procedure.

Further according to step a), the at least one modified feature is generated from at least one original feature by a view of the at least one original feature through at least one part of the spectacle lens, wherein at least one optical parameter of at the least one spectacle lens influences generating the at least one modified feature. As used herein, the term "feature" refers to a distinct characteristic of the recorded image or the optional reference image. The feature may be a coherent section within the respective image that is recognizable as it distinguishes from neighboring sections, for example in color, grey scale, image gradients or intensity differences. The feature may be a pattern or a part of a pattern, which may particularly be a pattern having a repeated or parallel uniform occurrence, in example a uniform repetition of a part of the pattern. The term "original feature" refers to the feature as it is, particularly a feature free from a refraction, more particularly a feature free from refraction caused by the at least one spectacle lens. The term "modified feature" refers to a feature that is influenced by a refraction, in particular a refraction caused by the at least one spectacle lens. The term "influences" refers to the fact that the refraction of the spectacle lens is the cause for the generation of the modified pattern, while the refraction depends on the at least one optical parameter. Thus, spectacle lenses having at least one different optical parameter may generate different modified patterns. In other words, the at least one optical parameter of the spectacle lens causes typically a distinct refraction that modifies the original feature in an unambiguous manner, which can be identified in the modified feature. The modification may be photometrical, particularly the modification may cause a magnification of the original feature, and/or the modification may deform the original pattern, in particular the observed coordinates of the original pattern. There may be embodiments that require at least two different recorded images so that the at least one optical parameter can be determined unambiguously. Such situations may occur due to a specific positioning or a specific tilt of the at least one spectacle lens with regard to the original feature.

According to step b), the at least one data set is used as an input for a procedure for determining a deviation between the at least one recorded data set and at least one reference data set comprising information about the at least one original feature. As used herein, the term "input" refers to data or a data set, which is transferred to a method step or computer program or a routine of a computer program. The input may start an execution of the method step or the computer program or the routine of the computer program. The term "deviation" refers to a modification of the information about the modified pattern caused by the influence of the refraction, in particular due to the at least one spectacle lens, more particularly due to the at least one optical parameter of the at least one spectacle lens. The deviation is determined in relation to the original pattern, in particular to a segment of the original pattern that corresponds to a segment of the modified pattern. The term "process" refers to at least a part of the computer-implemented method.

Further according to step b), the procedure uses at least one machine learning algorithm, wherein the at least one machine learning algorithm is trained by comparing the at least one modified feature to the at least one original feature or the at least one original feature to the at least one modified feature, whereby the at least one optical parameter of the at least one spectacle lens is determined in the procedure. As generally used, the term "machine learning algorithm" refers to a process of applying artificial intelligence to automatically generate a statistical model. A machine learning algorithm configured to generate the desired model based on a large number of training data sets can, preferably, be used. As generally used, the term "training" or grammatical variations thereof refers to a process of building a trained model, in particular determining parameters, in particular weighs, of the model. The training may comprise at least one optimization or tuning process, wherein a best parameter combination is determined. As used herein, the term "comparing", in particular in step b), refers to a process of analyzing the refraction caused by the at least one optical parameter of the spectacle lens on the original feature by investigating the deviation between the original feature and the modified feature. As a result, of the comparison the at least one optical parameter is determined.

Further according to step b), the procedure uses at least one machine learning algorithm configured to combine the information about the at least one original feature and the information about the at least one modified feature. As used herein, the term "combined" or any grammatical combination thereof refers to a correlation of first pieces of information comprised by a set with second pieces of information comprised by a different set. A first set may be the at least one recorded data set. A second set may be the at least one reference data set. As used herein, the term "correlate" refers to a mutual interaction of information, which is implemented in such a manner that the interaction generates an output. The machine learning algorithm may comprise nodes. The correlation may be implemented in such a way that information about at least a portion of the at least one modified feature in a first origin node and information about at least a part portion of the at least one original feature in a second origin node is passed to a common node and processed, in particular by a concatenation of vectors to a common piece of information. The common piece of information may then be comprised by the output of the first machine learning algorithm.

According to step c), steps a) and b) are repeated until a difference between the at least one optical parameter as determined for the at least one spectacle lens and the at least one optical parameter as known for the at least one spectacle lens is below a threshold. The steps a) and b) may be repeated using a training data set. The term "training data set" may refer to a data set on which the machine and deep learning model is trained. The term "threshold" refers to a maximal deviation between at the least one optical parameter determined in step b) and at the least one optical parameter as known. The one optical parameter is "known" as it may be available to computer-implemented method.

Further according to step c), the procedure for determining the deviation between the at least one recorded data set and the at least one reference data set is obtained and applicable in the computer-implemented method for determining the at least one optical parameter of the at least one spectacle lens. The computer-implemented method for determining the at least one optical parameter of the at least one spectacle lens is described in the following.

In a preferred embodiment, combining the information about the at least one original feature and the information about the at least one modified feature comprises correlating the information about the at least one modified feature comprised by the at least one recorded data set and the information about the at least one original feature comprised by the at least one reference data set, wherein the correlation is a mutual interaction of both information, which is implemented in such a manner that the interaction generates an output data comprising the information about the at least one modified feature and the information about the at least one original feature.

In an further embodiment, the at least one optical parameter as known for the at least one spectacle lens may further be an input for the procedure for determining a deviation between the at least one recorded data set and at least one reference data set. The at least one optical parameter is also available for the computer-implemented method. In a preferred embodiment, steps a) and b) can be repeated for more than one data set. These data sets may be referred to as "training data set".

In a second aspect, the present invention relates to a computer-implemented method for determining at least one optical parameter of at least one spectacle lens, wherein the method comprises the steps of:

a) providing at least one recorded data set comprising information about the at least one modified feature received from at least one recorded image showing at least one part of the spectacle lens and at least one modified feature, wherein the at least one modified feature is generated from at least one original feature by a view through the at least one part of the spectacle lens, wherein at least one optical parameter of at the least one spectacle lens influences generating the at least one modified feature; and

d) using the at least one recorded data set as an input for a procedure for determining a deviation between the at least one recorded data set and at least one reference data set comprising information about the at least one original feature as obtained during a training phase, whereby the at least one optical parameter of the at least one spectacle lens is determined in the procedure; and

e) outputting the at least one optical parameter of the at least one spectacle lens.

As used herein, the term "outputting" refers to issuing or displaying at least one piece of data, in particular of output data. Herein, the output data comprises information about the at least one optical parameter of the at least one spectacle lens. As used herein, the term "training phase" refers to a training of the procedure trained by the computer-implemented method for a training of a computer-implemented method for determining at least one optical parameter of at least one spectacle lens as described herein.

In a further embodiment, the at least one reference data set may further be an input for the procedure for determining a deviation between the at least one recorded data set and at least one reference data set. The at least one reference data set is then available for the computer-implemented method. In another embodiment, the at least one recorded data set may comprise information about the at least one modified feature received from a plurality of recorded images. As generally used, the term "plurality" refers to an assembly of at least two units, in particular a unit of at least two recorded images. In a particularly preferred embodiment, the at least two recorded images of the plurality of the recorded images may show the at least one modified feature from a different perspective. As generally used, the term "perspective" refers to a point of view, particularly to a point of view onto an image, more particularly to a point of view onto the at least one recorded image.

In a further embodiment, the information about the at least one modified feature may be comprised in the at least one recorded data set at least one of:

- the at least one recorded image;
- at least one portion of the recorded image; or
- at least one coordinate of the modified feature.

The at least one coordinate of the modified feature may be determined from the at least one recorded image and/or the at least one portion of the recorded image.

In another embodiment, the recorded data set may comprise at least one of:

- the at least one recorded image;
- the at least one portion of the recorded image;
- the at least one coordinate of the modified feature; or
- a pointer to a database storing at least one of:

  ○ the at least one recorded image;
  ○ the at least one portion of the recorded image; or
  ○ the at least one coordinate of the modified feature.

In another embodiment, the information about the at least one original feature is comprised in the recorded data as at least one of:

- at least one of the reference image;
- at least one portion of the reference image; or
- at least one coordinate of the original feature.

In another embodiment, the reference data set comprises at least one of:

- the at least one a reference image;
- the at least one portion of the reference image;
- the at least one coordinate of the original feature; or
- a pointer to a database storing at least one of:

  ○ the at least one reference image;
  ○ the at least one portion of the reference image; or

∘ the at least one coordinate of the original feature.

As further generally used, the term "database" refers to an organized collection of data sets or data. The data sets or data is stored and may be accessed electronically. In particular, the database can store the reference data set. The data or data set in the database may be accessed multiple time. The data or data set may be not altered after the accessing. In particular, the information about the at least one original feature may be used several times, in particular for several runs of the computer-implemented method for determining at least one optical parameter of at least one spectacle lens, especially for several runs of the computer-implemented method for determining at least one optical parameter of different spectacle lenses. After determination of the information on at least one original feature, corresponding data may be stored in a database. As used herein, the term "pointer" refers an object that stores an address of and/or within a database.

In another embodiment, the information about the original feature is determined from at least one of:

- the at least one reference image;
- at least one portion of the reference image;
- a known algorithm configured to generate the at least one original feature;
- the at least one recorded image; or
- the at least one portion of the recorded image.

In another embodiment, the at least one reference image and/or the at least one portion of the reference image shows the at least one original feature from a viewing direction vertical from above. In another embodiment, the information about the original feature is constructed from the at least one recorded image and/or the at least one portion of the recorded image from a visible segment of the at least one original feature for a segment of the at least one original feature being covered by the at least one spectacle lens in the at least one recorded image. As generally used, the term "constructed" refers to a method for predicting a portion of the original feature, in particular a portion of a pattern having a uniform occurrence as defined above, wherein the constructed portion is not shown on the recorded image which might be covered by the at least one spectacle lens. Herein, the construction may be performed by geometrical consideration.

In another embodiment the at least one recorded data set may have information only about a relevant segment of the at least one recorded image, wherein the relevant segment is determined via image segmentation by partitioning the at least one recoded image into the relevant segment and a negligible segment, wherein the relevant segment is a section of the at least one recorded image showing the at least one modified feature, and wherein the negligible segment is a further section of the at least one recorded image being free of the at least one modified feature. As used herein, the term "segment" refers to a part of the at least one modified or the at least one original feature. As generally used, the term "image segmentation" refers to a process of partitioning a digital image, in particular the recorded image, into multiple content related segments. The content related segments are chosen according to a criterion, such as color, grey-scale, image gradients or based on a reprojection error of the modified features w.r.t the original feature.

In a further embodiment, the at least one reference data set may have only information about the at least one original feature corresponding to a corresponding segment, wherein the corresponding segment is the part of the information about the at least one original feature that corresponds to the information about the at least one modified feature comprised in the relevant segment. In a particularly preferred embodiment, the image segmentation is performed by at least one of:

- an image processing method;
- a machine learning based method;
- a geometric procedure, in particular by at least one of:

  - investigating at least one back projection error in the at least one recorded image or in the at least one reference image; or
  - defining a plurality of segments of the recorded image showing the at least one original feature and/or the at least one modified feature; and comparing the at least one shown original feature and/or the at least one shown modified feature to a known original feature and determining a deviation between the known original feature and at least one shown original feature and/or the at least one shown modified feature for the plurality of segments; and identifying the relevant segment as the possible segment, wherein the deviation is largest.

As generally used, an "image processing method" is a computer based method that performs the image segmentation. Such a method may be thresholding as well as edge or region based segmentation. The term "machine learning based method" is a particular image processing method that comprises at least one machine learning algorithm as defined in the above.

In a further embodiment, the information about the at least one original feature and the information about the at least one modified feature may be adapted to one another by at least one of:

- scaling the information about the at least one original feature to a scaling of the information about the at least one modified feature, or vice versa;
- adjusting a segment of the information about the at least one original feature to a segment of the information about the at least one modified feature, or vice versa;
- adjusting a perspective of the information about the at least one original feature to a perspective of the information about the at least one modified feature, or vice versa; or
- editing the information about the at least one original feature or the information about the at least one modified feature by considering at least one camera parameter.

As used herein, the term "adapted" refers to an at least partial or full alignment of a first and a second parameter, wherein the first parameter is given for a first set, particularly the information about the at least one original feature, and the second parameter is given for a second set, particularly the information about the at least one modified feature. The alignment may be considered as partial in case a deviation of the first parameter and the second parameter is decreased but both parameters do not match, while the alignment may be considered as full in case the parameters match. As used herein, the term "scaling" refers to a transformation that enlarges or diminishes the information about the at least one original feature or the information about the at least one modified feature. The transformation may be a linear transformation. The term "adjusting a segment" refers to a method of aligning said segments to each other. In particular, to aligning said segments in such a way that they cover each other having the largest possible intersection. The term "adjusting a perspective" may refer to rotational or translational or a rotational and translational transformations, in particular of the point of view. The term "editing the information" may refer to modifying the information, particularly modifying the information in such a way that influences of camera parameters on the information about the original feature or the information about the modified feature are compensated for, particularly compensated for in such a way that the influence on the information about the original feature or the information about the modified feature has no impact on the determination of the at least one optical parameter using the procedure for determining the deviation between the at least one recorded data set and the at least one reference data set. As generally used, a "camera parameter" is a parameter used in a camera model to describe a mathematical relationship between three-dimensional directions of a point, in particular a point of view, in the depicted scene from which the light comes from and the two-dimensional pixels of its projection onto the image plane.

In a another embodiment, the at least one recorded data set may be given in pixels $m_m$ and/or in direction vectors $d_m$ and/or the at least one reference data set is given in pixels $m_o$ and/or in direction vectors $d_o$. As generally used, the term "pixel" or "picture cell" or " picture element" refers to an individual color value or gray-scale value of an image, particularly a recorded image or a reference image. The pixels $m_m$ and/or the pixels $m_o$ may be two-dimensional vectors. As used herein, the term "direction vector" refers to a vector pointing from a point of view to a pixel, particularly to a pixel of the respective pattern. The direction vectors $d_m$ and/or the direction vectors $d_o$ may be three-dimensional vectors.

In a further embodiment, the information about the at least one original feature or the information about the at least one modified feature may be scaled by an image resolution of the at least one recorded image or the at least one reference image. In a further embodiment, the pixels $m_m$ and/or the pixels $m_o$ may be scaled by the image resolution of the at least one recorded image and/or the at least one reference image showing the original feature. As generally used, the term "image resolution" is the detail an image holds. The number of pixel counts may be referred to as the image resolution. The image resolution may be given by a set of two positive integer numbers, with the first number being the number of pixel columns (width) and the second being the number of pixel rows (height). The image resolution may be given by the product of both numbers.

In a further embodiment, the information about the at least one original feature or the information about the at least one modified feature may be scaled by normalizing the direction vectors $d_m$ and/or the direction vectors $d_o$ to a unitary vector length, in particular vector length of 1. The vector length of 1 may be given in arbitrary units.

In another embodiment, the section of the information about the at least one original feature section and/or the section of the information about the at least one modified feature may be adjusted by subtracting an anchor pixel $m_a$ or an anchor direction vector $d_a$, respectively. As used herein the term "anchor pixel" or "anchor direction vector" refers to a common pixel or direction vector, observable in the at least one recorded image and the at least one reference image. The common pixel or direction vector may be a center pixel or a center direction vector.

In a particularly preferred embodiment, the perspective of the information about the at least one original feature may be adjusted by considering a camera pose of a camera that took the at least one reference image; and/or wherein the perspective of the information about the at least one modified feature is adjusted by considering a camera pose of a camera that took the at least one recorded image. As generally used, the term "camera pose" refers to a position and an orientation of a camera with respect to a reference coordinate system, in particular the coordinate system of the information about the at least one original feature or of the information about the at least one modified feature. The camera pose may be given by the rotation, such as by roll, pitch, and yaw or as a 3D position, such as by x, y, z, of the camera with respect to the reference coordinate system.

In a further embodiment, the process to determine the camera pose may weigh a part of the respective image that shows the at least one original feature above a part of the respective image that shows the at least one modified feature. As generally used, the term "weigh" or any grammatical variation thereof refers to an evaluation of an influence of individual variables of a mathematical model, for example with regard to their importance or reliability. It results in more important and/or more reliable elements having a greater influence on the result. For weighing variables, in particular pixels or direction vectors of a part of an image, above other variables, the variables may be multiplied with a parameter having a high absolute value for giving the variable more importance or reliability or a low parameter for giving the variables less importance or reliability.

In a particularly preferred embodiment, the process to determine the camera pose of the respective image may use at least one of:

- a random sample consensus algorithm;
- a perspective-n-point method;
- a nonlinear pose optimization method; or
- a filter method, specifically Kalman filtering.

As generally used, the term "random sample consensus algorithm" refers to a resampling algorithm for estimating a model within a set of measurements with outliers and gross errors. As generally used, the term "perspective-n-point method" is a method that can cope with problem of estimating the pose of a calibrated camera given a set of n 3 dimensional points in the world and their corresponding two-dimensional projections in the image. Typical perspective-n-point methods are algebraic perspective-3-point (AP3P), efficient perspective-n-point (EPnP), and sequential quadratic perspective-n-point (SQPnP). The random sample consensus algorithm can be used with said methods to make the solution for the camera pose more robust to outliers. As generally used, the term "nonlinear pose optimization method" refers to an algorithm that starts with an approximate value of the camera pose and carries out a nonlinear optimization to determine the camera pose, in particular carries out an iterative least squares adjustment. As generally used, the term "Kalman filtering" refers to an algorithm that uses a series of measurements observed over time, including statistical noise and other inaccuracies, and produces estimates of unknown variables that tend to be more accurate than those based on a single measurement alone, by estimating a joint probability distribution over the variables for each timeframe.

In another embodiment, the camera pose may be determined relative to the coordinate system of the respective feature. In another embodiment, for editing the information about the at least one original feature or the information about the at least one modified feature by considering at least one camera parameter the at least one camera parameter may be determined by at least one of:

- querying the at least one camera parameter from a database; or
- calibrating the camera.

As already defined above, the term "database" refers to an organized collection of data sets or data comprising information. The data or data set is stored and accessed electronically. In particular, the database can store the at least one camera parameter. The data or data set in the database may be accessed multiple time. In particular, the information about the at least one camera parameter may be used several times, in particular for several different runs of the a computer-implemented method for determining at least one optical parameter of at least one spectacle lens, in particular for different several runs using different spectacle lenses. After calibrating the camera the information may be stored in a database.

In a particularly preferred embodiment, the at least one camera parameter may be at least one of:

- a camera constant;
- a principal-point location;
- at least one distortion parameter;
- an aspect ratio; or
- a skew of a camera sensor axis.

As generally used, the term "camera constant" refers to a distance of a camera coordinate system to an imaging sensor. As generally used, the term "principal point" refers to a point on the image plane onto which the perspective center is projected. It may also be the point from which the focal length of the lens is measured. As generally used, the term " distortion parameter" refers to a parameter related to at least one lens distortion, such as a radial-symmetric distortion and/or a tangential-asymmetric distortion. As generally used, the term "aspect ratio" refers to a deviation of an actual shape of at least one camera pixel from an assumed shape, in particular a deviation of the actual shape of the at least one camera pixel from a square shape, in particular deviation of the actual shape of the at least one camera pixel due to a compression of the at least one camera pixel.

In a further embodiment, the procedure for determining a deviation between the at least one modified feature and the at least one original feature may use a first machine learning algorithm configured to embed the information about the at least one modified feature and the information about the at least one original feature. As used herein, the term "embedding" or grammatical variations thereof refers to a correlation of first pieces of information comprised by a set with second pieces of information comprised by the same set, wherein the second pieces of information may be different or identical with the first pieces of information. Consequently, the at least one modified feature may be correlated with itself and, thus, independent of a correlation of the information about the at least one original feature, or vice versa. The correlation generates the output of the first machine learning algorithm. The correlation may be implemented in such a way that information about at least a first portion of the at least one modified feature in a first origin node and information about at least a second portion of the at least one modified feature in a second origin node may be passed to a common node and processed to a common piece of information. The same implementation may be performed for information about the at least one original feature. The common piece of information may then be comprised by the output of the first machine learning algorithm.

As used herein, the terms "first" or "second" or "third" are considered as a description of an element without specifying an order or a chronological sequence and without excluding a possibility that other elements of the same may be present. A "first" element is different from a "second" element and a "third element". This holds for any possible permutation.

In a another embodiment, the first machine learning algorithm may embed the pixels $m_m$ and/or the direction vectors $d_m$ representing the information about the at least one modified feature into feature vectors $f_m$ and the pixels $m_o$ or the direction vectors $d_o$, respectively, representing the information about the at least one original feature into feature vectors $f_o$. The term "feature vector" may refer to a vector having one or more dimensions.

In another embodiment, the first machine learning algorithm may be implemented as at least one of:

- a Multi-Layer Perceptron neural network having at least one layer;
- a convolutional neural network having at least one layer; or
- a recurrent neural network having at least one layer.

As generally used, the term "Multi-Layer Perceptron neural network" or "MLP neural network" specifically refers to a class of feedforward artificial neural networks. A feedforward neural network is an artificial neural network wherein connections between the nodes do not form a cycle. The term "layers" refers to a collection of nodes. The Multi-Layer Perceptron neural network has an input layer comprising neurons into which information is inputted, in particular the information about the at least one modified feature or the at least one original feature. The Multi-Layer Perceptron neural network has an output layer comprising neurons which can be read out or output information, in particular processed information about the at least one modified feature or the at least one original feature. The Multi-Layer Perceptron neural network may comprise at least one hidden layer comprising neurons, which process information. The number of neurons may be ascending, specifically in such a way that more nodes of a destination layer receiving an information are present compared to a number of nodes of an origin layer providing the information.

As generally used, the term "convolutional neural network" refers to a class of artificial neural networks. A convolutional neural network includes at least one layer that performs at least one convolution. The at least one convolution may be performed by a hidden layer. As generally used, the term "recurrent neural network" refers to a class of artificial neural networks where connections between nodes form a graph along a temporal sequence. The nodes are connected via directed edges, so that data comprising information can pass from a node to a connected node but not vice versa.

In another embodiment, the at least one machine learning algorithm configured to combine the information about the at least one original feature and the information about the at least one modified feature may be a second machine learning algorithm. In a particularly preferred embodiment, the second machine learning algorithm is implemented as at least one of:

- a graph neural network, wherein the graph neural network comprises nodes for storing information and edges for passing information between the nodes; or
- a recurrent neural network.

As generally used, the term "graph neural network" describes a class of machine learning algorithm designed to perform inference on data described by graphs by providing a data structure corresponding to a structure of the graph. The data structure consists of two components: nodes and edges, wherein the nodes correspond to vertices of the graph structure, and wherein the edges correspond to edges of the graph structure. As generally used, the term "node" refers to an element in the data structure used to process and store data comprising information. As generally used, the term "edges" refers to a connection of two nodes along which data comprising information can pass. A node may thus be considered as an element in the data structure in which at least to edges meet. An image may be considered as a special graph.

In a particularly preferred embodiment, the second machine learning algorithm may comprise an attention mechanism weighing the edges. As generally used, the term "weighing" refers to the evaluation of individual influencing variables of a mathematical model, for example with regard to their importance or reliability. Consequently, more important or more reliable elements may have a greater influence on the result. In this regard, the edges may be weighed directly, in particular by multiplying the information passing from one edge to another edge by a trainable attention parameter.

In a further embodiment, an input into the second machine learning algorithm may store the information about the at least one modified feature in a first type of the nodes, wherein an input into the second machine learning algorithm may store the information about the at least one original feature in a second type of nodes. In a particularly preferred embodiment, the information about the at least one modified feature may be inputted into the second machine learning algorithm and stored in the first type of the nodes are the feature vectors $f_m$ and/or wherein the information about the at least one original feature may be inputted into the second machine learning algorithm and stored in the second type of the nodes are the feature vectors $f_o$. As used herein, the term "inputting" or grammatical variations thereof refers to entering an input, in particular input data comprising information.

In a further preferred embodiment, the information passed between the nodes may be passed iteratively, wherein in a first iterative step the information passed between the nodes may be passed between the nodes of the same type and in a second step the information passed between the nodes may be passed between the nodes of a different type. As generally used, the term "iteratively" describes that an iteration process is repeating the same or similar actions several times in order to approach a solution or a specific goal. The same or similar action may also be referred to as iterative steps. In each iterative step,

- information stored in an origin node may be passed via the edges to all connected nodes;
- the passed information may be weighed with the attention parameter:
- the weighed information from all origin nodes passed to one of the connected nodes may be correlated;
- the correlated information may be stored in the connected nodes.

In an iterative step, all nodes of one type may be involved. Each node of one type may be connected via so called self-edges to each other node of the same type, particularly. Each node of one type may further be connected to each other node of the other type, particularly via so called cross-edges. In a particularly preferred embodiment, the edges may be undirected so that the information passed between a first node and a second node that are connected via an edge can be passed from the first node to the second node and vice versa. All edges of the graph neural network may be undirected.

In another embodiment, the procedure for determining a deviation between the at least one modified feature and the at least one original feature may use a third machine learning algorithm configured to perform a regression for determining the at least one optical parameter. As generally used, the term "regression" refers to a statistical analysis tool that aims to determine a relationship between an input, in particular input data or input dataset, and a statistical model to determine output parameters. In this process, the statistical model may be fitted onto the input data. The input data may not change during the regression. In the case of the present invention, the input may be the output of the at least one or second machine learning algorithm configured to combine the information about the at least one original feature and the information about the at least one modified feature. The input may further be the output of the second machine learning algorithm, in particular the graph neural network. The statistical model may be represented by the third machine learning algorithm. The output may be the at least one optical parameter of the spectacle lens.

In a further embodiment, the third machine learning algorithm may be implemented as at least one of:

- a Multi-Layer Perceptron neural network having at least two layers; in particular wherein the at least two layers have an same number of neurons;
- a support-vector machine model;
- a random forest method; or
- a boosting algorithm.

As generally used, the term "support-vector machine model" refers to a supervised learning model having associated learning algorithms that analyze data for classification and regression analysis. The term "random forest method" refers to an ensemble learning method for classification, regression and other tasks that operates by constructing a multitude of decision trees at training time. The term "boosting algorithm" refers to an ensemble meta-algorithm for primarily reducing bias, and also variance in supervised learning, and a family of machine learning algorithms that convert weak learners to strong ones.

In another embodiment, the at least two layers may comprise an output layer generating the output, wherein the output layer may have a number of neurons that may equal a number of the least one optical parameter. In particular the output layer may output the determined at least one optical parameter. Each neuron of the output layer may output a different optical parameter.

In a further embodiment, the input for the procedure for determining the deviation between the at least one modified feature and the at least one original feature may be an input for the first machine learning algorithm. In a particularly preferred embodiment, an output of the first machine learning algorithm may be an input for the second machine learning algorithm. In a particularly preferred embodiment, an output of the second machine learning algorithm may be an input for the third machine learning algorithm. As used herein, the term "input" refers to data or a data set comprising information which is provided to a method step or computer program or a routine of the computer program. The input may start the execution of the method step or the computer program or the routine of the computer program. The term "output" refers to data or a data set comprising information outputted by the method step or the computer program or the routine of the computer program, in particular after internal calculation.

In a further embodiment, the output of the second machine learning algorithm may be generated by correlating information stored in the nodes of the second machine learning algorithm. This step may be referred to as "graph readout". The information may be correlated in such a way that it may serve as an input for the third machine learning algorithm. Thus, if the input of the third machine learning algorithm may require a number of input parameters, the information may be combined in such a way that the number on individual combined information meets the number of input parameters.

In a particularly preferred embodiment, the information may be correlating by at least one of:

- calculating a sum;
- calculating a mean value;
- determining a maximum value; or
- determining a minimal value.

As used herein, the term "combined" refers to a combination of node data comprising the information.

In a particularly preferred embodiment, the third machine learning algorithm may output the at least one optical parameter. In a particularly preferred embodiment, the at least one optical parameter may be at least one of:

- a spherical power; or
- a cylinder power and an cylinder axis.

As defined in the Standard, Section 3.12.2, the term "spherical power", usually abbreviated to "sphere" or "sph", refers to a value of a back vertex power of a spherical-power lens, or for a back vertex power in one of two principal meridians of an astigmatic-power lens, depending on a principal meridian chosen for reference. As defined in the Standard, Section 3.13.7, the term "cylinder", usually abbreviated to "cylinder" or "cyl", refers to an algebraic difference between principal powers with power of the principal meridian chosen for reference being subtracted from the other principal power. As defined in the Standard, Section 3.13.8, the term "cylinder axis", usually abbreviated to "cyl axis" or "axis", refers to a direction of the principal meridian of a lens whose vertex power is chosen for reference.

Various embodiments can be conceived for implementing the methods according to the present invention. According to a first embodiment, all method steps can be performed by using a single processing device, such as a computer, especially a stand-alone computer, or an electronic communication unit, specifically a smartphone, a tablet, a personal digital assistant, or a laptop. In this embodiment, the single processing device may be configured to exclusively perform at least one computer program, in particular at least one line of computer program code configured to execute at least one algorithm, as used in at least one of the methods according to the present invention. Herein, the computer program as executed on the single processing device may comprise all instructions causing the computer to carry out the at least one of the methods according to the present invention. Alternatively or in addition, at least one method step can be performed by using at least one remote processing device, especially selected from at least one of a server or a cloud computer, which is not located at the site of the user when executing the at least one method step. In this further embodiment, the computer program may comprise at least one remote portion to be executed by the at least one remote processing device to carry out the at least one method step. Further, the computer program may comprise at least one interface configured to forward and/or receive data to and/or from the at least one remote portion of the computer program.

In another aspect, the present invention relates to a data training apparatus for a training of a process for determining at least one optical parameter of at least one spectacle lens, wherein the data training apparatus is configured to carry out a computer-implemented method for a training of a computer-implemented method for determining at least one optical parameter of at least one spectacle lens comprising the steps:

a) providing at least one recorded data set comprising information about the at least one modified feature received from at least one recorded image showing at least one part of the spectacle lens and at least one modified feature, wherein the at least one modified feature is generated from at least one original feature by a view through the at least one part of the spectacle lens, wherein at least one optical parameter of at the least one spectacle lens influences generating the at least one modified feature; and

b) using the at least one recorded data set as an input for a procedure for determining a deviation between the at least one recorded data set and at least one reference data set comprising information about the at least one original feature, wherein the procedure uses at least one machine learning algorithm configured to combine the information about the at least one original feature and the information about the at least one modified feature, wherein the at least one machine learning algorithm is trained by comparing the at least one modified feature to the at least one original feature or the at least one original feature to the at least one modified feature, whereby the at least one optical parameter of the at least one spectacle lens is determined in the procedure; and

c) repeating steps a) and b) until a difference between the at least one optical parameter as determined for the at least one spectacle lens and the at least one optical parameter as known for the at least one spectacle lens is below a threshold, whereby the procedure for determining the deviation between the at least one recorded data set and the at least one reference data set is obtained and applicable in the computer-implemented method for determining the at least one optical parameter of the at least one spectacle lens.

In a further aspect, the present invention relates to a data determining apparatus for determining at least one optical parameter of at least one spectacle lens, wherein the data determining apparatus is configured to carry out a computer-implemented method for determining at least one optical parameter of at least one spectacle lens comprising the steps of:

a) providing at least one recorded data set comprising information about the at least one modified feature received from at least one recorded image showing at least one part of the spectacle lens and at least one modified feature, wherein the at least one modified feature is generated from at least one original feature by a view through the at least one part of the spectacle lens, wherein at least one optical parameter of at the least one spectacle lens influences generating the at least one modified feature; and

d) using the at least one recorded data set as an input for a procedure for determining a deviation between the at least one recorded data set and at least one reference data set comprising information about the at least one original feature as obtained during a training phase, whereby the at least one optical parameter of the at least one spectacle lens is determined in the procedure; and

e) outputting the at least one optical parameter of the at least one spectacle lens.

As generally used, the term "data apparatus", in particular the "data training apparatus" or " the data determining apparatus" refers to an apparatus which is designated for determining the data related to refractive values from the at least one input file, which may, preferably, be provided to the processing device by at least one input interface, and to provide the data related to the refractive values, such as for further processing, preferably by at least one input interface, in particular by using a system as described below in more detail. Specifically, the processing device may comprise at least one of an integrated circuit, in particular an application-specific integrated circuit (ASIC), or a digital processing device, in particular at least one of a digital signal processor (DSP), a field programmable gate array (FPGA), a microcontroller, a microcomputer, a computer, or an electronic communication unit, specifically a smartphone, a tablet, a laptop. Further components may be feasible, in particular at least one of a data acquisition unit, a preprocessing unit, or a data storage unit. The processing device may, preferably, be configured to perform at least one computer program, in particular at least one computer program performing or supporting the determining of the data related to the refractive values from the at least one input file, wherein the processing of the data be performed in a consecutive, a parallel, or a combined fashion.

In a further aspect, the present invention relates to a computer program comprising instructions which, when the program is executed by a computer, cause the computer to carry out the method as described. As used herein, the term "computer program product" refers to the program as a tradable product. The product may generally exist in an arbitrary format, such as in a paper format, or on a computer-readable data carrier. Specifically, the computer program product may be distributed over a data network, such as the internet.

In a further aspect, the present invention relates to a trained machine-learning model in accordance with the method as described. As used herein, the term "trained machine-learning model" refers to a model for determining at least one optical parameter of at least one spectacle lens which was trained by using at least one training dataset, also denoted as "training data". In particular, the training may have involved the determination of the at least one optical parameter of at least one spectacle lens by using at least one machine learning algorithm as described elsewhere herein.

In a further aspect, the present invention related to a use of a carrier element in performing the method as described herein, wherein the carrier element comprises a surface showing at least one original feature. As used herein, the term "surface" refers to a visible surface area of the carrier element. In a particularly preferred embodiment, the surface may further comprise a marked lay-on area for at least one spectacle having the at least one spectacle lens. As used herein, the term "lay-on area" refers to an area that is provided on the surface of the carrier element for placing the at least one spectacle, in particular the frame of the spectacle. The lay-on area may be rectangular; however, a different form may also be feasible.

In a further embodiment, the carrier element may be at least one of:

- a board;
- a piece of paper; or
- a screen.

As used herein, the term "board" refers to a plane object. Herein, the board may be an aluminum board or a hard polymer board. The term "screen" refers to an electronic visual display device.

In a further aspect, the present invention relates to a method for producing at least one spectacle lens, wherein the producing of the at least one spectacle lens comprises processing at least one lens blank by using data related to refractive values as determined by carrying out a step of

a) providing at least one recorded data set comprising information about the at least one modified feature received from at least one recorded image showing at least one part of the spectacle lens and at least one modified feature, wherein the at least one modified feature is generated from at least one original feature by a view through the at least one part of the spectacle lens, wherein at least one optical parameter of at the least one spectacle lens influences generating the at least one modified feature; and

d) using the at least one recorded data set as an input for a procedure for determining a deviation between the at least one recorded image data set and at least one reference image data set comprising information about the at least one original feature as obtained during a training phase, whereby the at least one optical parameter of the at least one spectacle lens is determined in the procedure; and

e) outputting the at least one optical parameter of the at least one spectacle lens.

With respect to the prior art, the computer-implemented method for a training of a computer-implemented method for determining at least one optical parameter of at least one spectacle lens, the computer-implemented method for determining at least one optical parameter of at least one spectacle lens, the data training apparatus for a training of a process for determining at least one optical parameter of at least one spectacle lens, the data determining apparatus for determining at least one optical parameter of at least one spectacle lens, the computer program, the trained machine-learning model, the use of a carrier element and the method for producing at least one spectacle lens according to the present invention exhibit the following advantages of a more efficient and more reliable approach for determining the at least one optical parameter.

The information about the at least one reference image may be known, in particular the at least one coordinate of the original feature may be known. In this case, only one recorded image is required and it is not necessary to capture a reference image. The errors in the determined at least one optical parameter may then be reduced as the information about the at least one reference image may be more accurate. This may be because the information about the at least one reference image may be determined by an algorithm. Another reason may be that the information about the at least one reference image may be given in a resolution higher than the resolution of the at least one recorded image. The effort to determine the at least one optical parameter is thereby reduced. Also the information about the at least one reference image may be determined statistically.

It is also an advantage that a variety of original features may be used. As the at least one original feature may be a pattern, this pattern may be optimized in such a way that the at least one optical parameter may be determined more reliably, in particular with a higher accuracy.

As used herein, the terms "have", "comprise" or "include" or any arbitrary grammatical variation thereof are used in a non-exclusive way. Thus, these terms may refer to both a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

As further used herein, the terms "preferably", "more preferably", "particularly", "more particularly", or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in this way with other features of the invention.

Summarizing, the following Embodiments are particularly preferred within the scope of the present invention:

Embodiment 1. A computer-implemented method for a training of a computer-implemented method for determining at least one optical parameter of at least one spectacle lens, wherein the method comprises the steps of:

a) providing at least one recorded data set comprising information about the at least one modified feature received from at least one recorded image showing at least one part of the spectacle lens and at least one modified feature, wherein the at least one modified feature is generated from at least one original feature by a view through the at least one part of the spectacle lens, wherein at least one optical parameter of at the least one spectacle lens influences generating the at least one modified feature;

b) using the at least one recorded data set as an input for a procedure for determining a deviation between the at least one recorded data set and at least one reference data set comprising information about the at least one original feature, wherein the procedure uses at least one machine learning algorithm configured to combine the information about the at least one original feature and the information about the at least one modified feature, wherein the at least one machine learning algorithm is trained by comparing the at least one modified feature to the at least one original feature or the at least one original feature to the at least one modified feature, whereby the at least one optical parameter of the at least one spectacle lens is determined in the procedure; and

c) repeating steps a) and b) until a difference between the at least one optical parameter as determined for the at least one spectacle lens and the at least one optical parameter as known for the at least one spectacle lens is below a threshold, whereby the procedure for determining the deviation between the at least one recorded data set and the at least one reference data set is obtained and applicable in the computer-implemented method for determining the at least one optical parameter of the at least one spectacle lens.

Embodiment 2. The method according to the preceding embodiment, wherein combining the information about the at least one original feature and the information about the at least one modified feature comprises correlating the information about the at least one modified feature comprised by the at least one recorded data set and the information about the at least one original feature comprised by the at least one reference data set, wherein correlating comprises a mutual interaction of both information, which is implemented in such a manner that the interaction generates an output.

Embodiment 3. The method according to any of the preceding embodiments, wherein the at least one optical parameter of at least one spectacle lens is further an input for the procedure for determining a deviation between the at least one recorded data set and at least one reference data set.

Embodiment 4. The method according to any of the preceding embodiments, wherein steps a) and b) are repeated for more than one data set.

Embodiment 5. A computer-implemented method for determining at least one optical parameter of at least one spectacle lens, wherein the method comprises the steps of:

a) providing at least one recorded data set comprising information about the at least one modified feature received from at least one recorded image showing at least one part of the spectacle lens and at least one modified feature, wherein the at least one modified feature is generated from at least one original feature by a view through the at least one part of the spectacle lens, wherein at least one optical parameter of at the least one spectacle lens influences generating the at least one modified feature;

d) using the at least one recorded data set as an input for a procedure for determining a deviation between the at least one recorded data set and at least one reference data set comprising information about the at least one original feature as obtained by any one of the preceding embodiments, whereby the at least one optical parameter of the at least one spectacle lens is determined in the procedure; and

e) outputting the at least one optical parameter of the at least one spectacle lens.

Embodiment 6. The method according to any of the preceding embodiments, wherein the at least one reference data set is further an input for the procedure for determining a deviation between the at least one recorded data set and at least one reference data set.

Embodiment 7. The method according to any one of the preceding embodiments, wherein the at least one recorded data set comprises information about the at least one modified feature received from a plurality of the recorded images.

Embodiment 8. The method according to the preceding embodiment, wherein at least two recorded images the at least one modified feature from a different perspective.

Embodiment 9. The method according to any one of the preceding embodiments, wherein the information about the at least one modified feature is comprised in the at least one recorded data set at least one of:

- the at least one recorded image;
- at least one portion of the recorded image; or
- at least one coordinate of the modified feature.

Embodiment 10. The method according to any one of the preceding embodiments, wherein the recorded data set comprises at least one of:

- the at least one recorded image;
- the at least one portion of the recorded image;
- the at least one coordinate of the modified feature; or
- a pointer to a database storing at least one of:

    ◦ the at least one recorded image;
    ◦ the at least one portion of the recorded image; or
    ◦ the at least one coordinate of the modified feature.

Embodiment 11. The method according to any one of the preceding embodiments, wherein the information about the at least one original feature is comprised in the recorded data as at least one of:

- at least one of the reference image;
- at least one portion of the reference image; or
- at least one coordinate of the original feature.

Embodiment 12. The method according to any one of the preceding embodiments, wherein the reference data set comprises at least one of:

- the at least one a reference image;
- the at least one portion of the reference image;
- the at least one coordinate of the original feature; or
- a pointer to a database storing at least one of:

    ◦ the at least one reference image;
    ◦ the at least one portion of the reference image; or
    ◦ the at least one coordinate of the original feature.

Embodiment 13. The method according to any one of the preceding embodiments, wherein the information about the original feature is determined from at least one of:

- the at least one reference image;
- at least one portion of the reference image;
- a known algorithm configured to generate the at least one original feature;
- the at least one recorded image; or
- the at least one portion of the recorded image.

Embodiment 14. The method according to the preceding embodiment, wherein the at least one reference image and/or the at least one portion of the reference image shows the at least one original feature from a viewing direction vertical from above.

Embodiment 15. The method according to any one of the two preceding embodiments, wherein the information about the original feature is constructed from the at least one recorded image and/or the at least one portion of the recorded image from a visible segment of the at least one original feature for a segment of the at least one original feature being covered by the at least one spectacle lens in the at least one recorded image.

Embodiment 16. The method according to any one of the preceding embodiments, wherein the at least one recorded data set has only information about the at least one modified feature received from a relevant segment of the at least one recorded image, wherein the relevant segment is determined via image segmentation by partitioning the at least one recoded image into the relevant segment and a negligible segment, wherein the relevant segment is a section of the at least one recorded image showing the at least one modified feature, and wherein the negligible segment is a further section of the at least one recorded image being free of the at least one modified feature.

Embodiment 17. The method according to the preceding embodiment, wherein the at least one reference data set has only information about the at least one original feature corresponding to a corresponding segment, wherein the corresponding segment is the part of the information about the at least one original feature that corresponds to the information about the at least one modified feature comprised in the relevant segment.

Embodiment 18. The method according to any one of the two preceding embodiments, wherein the image segmentation is performed by at least one of:

- an image processing method;
- a machine learning based method; or
- a geometric procedure, in particular by at least one of:

  ◦ investigating at least one back projection error in the at least one recorded image or in the at least one reference image; or
  ◦ defining a plurality of segments of the recorded image showing the at least one original feature and/or the at least one modified feature; and comparing the at least one shown original feature and/or the at least one shown modified feature to a known original feature and determining a deviation between the known original feature and at least one shown original feature and/or the at least one shown modified feature for a plurality of segments; and identifying the relevant segment as the possible segment, wherein the deviation is largest.

Embodiment 19. The method according to any one of the preceding embodiments, wherein the information about the at least one original feature and the information about the at least one modified feature are adapted to one another by at least one of:

- scaling the information about the at least one original feature to a scaling of the information about the at least one modified feature, or vice versa;
- adjusting a segment of the information about the at least one original feature to a segment of the information about the at least one modified feature, or vice versa;
- adjusting a perspective of the information about the at least one original feature to a perspective of the information about the at least one modified feature, or vice versa; or
- editing the information about the at least one original feature or the information about the at least one modified feature by considering at least one camera parameter.

Embodiment 20. The method according to any one of the preceding embodiments, wherein the at least one recorded data set is given in at least one of pixels $m_m$ and/or direction vectors $d_m$, wherein the at least one reference data set is given in at least one of pixels $m_o$ or direction vectors $d_o$.

Embodiment 21. The method according to any one of the two preceding embodiments, wherein the information about the at least one original feature or the information about the at least one modified feature is scaled by an image resolution of the at least one recorded image or the at least one reference image.

Embodiment 22. The method according to the preceding embodiment, wherein the pixels $m_m$ and/or the pixels $m_o$ are scaled by the image resolution of the at least one recorded image and/or the at least one reference image showing the original feature.

Embodiment 23. The method according to the preceding embodiment 13, wherein the information about the at least one original feature or the information about the at least one modified feature is scaled by normalizing the direction vectors $d_m$ and/or the direction vectors $d_o$ to a unitary vector length, in particular vector length of 1.

Embodiment 24. The method according to any one of the five preceding embodiments, wherein the segment of the information about the at least one original feature section and/or the section of the information about the at least one modified feature is adjusted by subtracting an anchor pixel $m_a$ or an anchor direction vector $d_a$.

Embodiment 25. The method according to any one of the six preceding embodiments, wherein the perspective of the information about the at least one original feature section is adjusted by considering a camera pose of a camera that took the at least one reference image; and/or wherein the perspective of the information about the at least one modified feature is adjusted by considering a camera pose of a camera that took the at least one recorded image.
Embodiment 26. The method according to the preceding embodiment, wherein the process to determine the camera pose weighs a part of the respective image that shows the at least one original feature above a part of the respective image that shows the at least one modified feature.

Embodiment 27. The method according to the two preceding embodiments, wherein the process to determine the camera pose of the respective image uses at least one of:

- a random sample consensus algorithm;
- a perspective-n-point method;
- a nonlinear pose optimization method; or
- a filter method, specifically Kalman filtering.

Embodiment 28. The method according to any one of the three preceding embodiments, wherein the camera pose is determined relative to the coordinate system of the respective feature.

Embodiment 29. The method according to any one of the ten preceding embodiments, wherein for editing the information about the at least one original feature or the information about the at least one modified feature by considering at least one camera parameter the at least one camera parameter is determined by at least one of:

- querying the at least one camera parameter from a database; or
- calibrating the camera.

Embodiment 30. The method according to any one of the preceding eleven embodiments, wherein the at least one camera parameter is at least one of:

- a camera constant;
- a principal-point location; or
- at least one distortion parameter;
- an aspect ratio; or
- a skew of a camera sensor axis.

Embodiment 31. The method according to any one of the preceding embodiments, wherein the procedure for determining a deviation between the at least one modified feature and the at least one original feature uses a first machine learning algorithm configured to embed the information about the at least one modified feature and the information about the at least one original feature.

Embodiment 32. The method according to the preceding embodiment, wherein the first machine learning algorithm embeds the pixels $m_m$ and/or the direction vectors $d_m$ representing the information about the at least one modified feature into feature vectors $f_m$ and the pixels $m_o$ or the direction vectors $d_o$ respectively, representing the information about the at least one original feature into feature vectors $f_o$.

Embodiment 33. The method according to any one of the two preceding embodiments, wherein the first machine learning algorithm is implemented as at least one of:

- a Multi-Layer Perceptron neural network having at least two layers, in particular wherein the at least two layers have an ascending number of neurons starting from the input;
- a convolutional neural network having at least one layer; or
- a recurrent neural network having at least one layer.

Embodiment 34. The method according to any one of the preceding embodiments, wherein the at least one machine learning algorithm configured to combine the information about the at least one original feature and the information about the at least one modified feature is a second machine learning algorithm.

Embodiment 35. The method according to the preceding embodiment, wherein the second machine learning algorithm is implemented as at least one of:

- a graph neural network, wherein the graph neural network comprises nodes for storing information and edges for passing information between the nodes; or
- a recurrent neural network.

Embodiment 36. The method according to the preceding embodiment, wherein the second machine learning algorithm comprises an attention mechanism weighing the edges.

Embodiment 37. The method according to any one of the two preceding embodiments, wherein an input into the second machine learning algorithm stores the information about the at least one modified feature in a first type of the nodes, wherein an input into the second machine learning algorithm stores the information about the at least one original feature in a second type of nodes.

Embodiment 38. The method according to the preceding embodiment, wherein the information about the at least one modified feature inputted into the second machine learning algorithm and stored in the first type of the nodes are the feature vectors $f_m$ and/or wherein the information about the at least one original feature inputted into the second machine learning algorithm and stored in the second type of the nodes are the feature vectors $f_o$.

Embodiment 39. The method according to any one of the two preceding embodiments, wherein the information passed between the nodes is passed iteratively, wherein in a first iterative step the information passed between the nodes is passed between the nodes of the same type and in a second step the information passed between the nodes is passed between the nodes of a different type.

Embodiment 40. The method according to any one of the five preceding embodiments, wherein the edges are undirected so that the information passed between a first node and a second node that are connected via an edge can be passed from the first node to the second node and vice versa.

Embodiment 41. The method according to any one of the preceding embodiments, wherein the procedure for determining a deviation between the at least one modified feature and the at least one original feature uses a third machine learning algorithm configured to perform a regression for determining the at least one optical parameter.

Embodiment 42. The method according to the preceding embodiment, wherein the third machine learning algorithm is implemented as at least one of:

- a Multi-Layer Perceptron neural network having at least two layers; in particular wherein the at least two layers have an same number of neurons;
- a support-vector machine model;
- a random forest method; or

a boosting algorithm.

Embodiment 43. The method according to the preceding embodiment, wherein the at least two layers comprise an output layer generating the output, wherein the output layer has a number of neurons that equals a number of the least one optical parameter.

Embodiment 44. The method according to any one of the thirteen preceding embodiments, wherein the input for the procedure for determining the deviation between the at least one modified feature and the at least one original feature is an input for the first machine learning algorithm.

Embodiment 45. The method according to any one of the eleven preceding embodiments, wherein an output of the first machine learning algorithm is an input for the second machine learning algorithm.

Embodiment 46. The method according to any one of the five preceding claims, wherein an output of the second machine learning algorithm is an input for the third machine learning algorithm.

Embodiment 47. The method according to any one of the thirteen preceding embodiments, wherein the output of the second machine learning algorithm is generated by correlated information stored in the nodes of the second machine learning algorithm.

Embodiment 48. The method according to the preceding embodiment, wherein the information is correlated by at least one of:

- calculating a sum;
- calculating a mean value;
- determining a maximum value; or
- determining a minimal value.

Embodiment 49. The method according to any one of the eight preceding embodiments, wherein the third machine learning algorithm outputs the at least one optical parameter.

Embodiment 50. The method according to any one of the preceding embodiments, wherein the at least one optical parameter is at least one of:

- a spherical power; or
- a cylinder power and an cylinder axis.

Embodiment 51. A data training apparatus for a training of a process for determining at least one optical parameter of at least one spectacle lens, wherein the data training apparatus is configured to carry out a computer-implemented method for a training of a computer-implemented method for determining at least one optical parameter of at least one spectacle lens comprising the steps:

a) providing at least one recorded data set comprising information about the at least one modified feature received from at least one recorded image showing at least one part of the spectacle lens and at least one modified feature, wherein the at least one modified feature is generated from at least one original feature by a view through the at least one part of the spectacle lens, wherein at least one optical parameter of at the least one spectacle lens influences generating the at least one modified feature;
b) using the at least one recorded data set as an input for a procedure for determining a deviation between the at least one recorded data set and at least one reference data set comprising information about the at least one original feature, wherein the procedure uses at least one machine learning algorithm configured to combine the information about the at least one original feature and the information about the at least one modified feature, wherein the at least one machine learning algorithm is trained by comparing the at least one modified feature to the at least one original feature or the at least one original feature to the at least one modified feature, whereby the at least one optical parameter of the at least one spectacle lens is determined in the procedure; and
c) repeating steps a) and b) until a difference between the at least one optical parameter as determined for the at least one spectacle lens and the at least one optical parameter as known for the at least one spectacle lens is below a threshold, whereby the procedure for determining the deviation between the at least one recorded data set and the at least one reference data set is obtained and applicable in the computer-implemented method for determining the at least one optical parameter of the at least one spectacle lens.

Embodiment 52. The data training apparatus according to the preceding embodiment, wherein the data training apparatus is configured to carry out the method according to any one of embodiments 1 to 4 or 6 to 50.

Embodiment 53. A data determining apparatus for determining at least one optical parameter of at least one spectacle lens, wherein the data determining apparatus is configured to carry out a computer-implemented method for determining at least one optical parameter of at least one spectacle lens comprising the steps of:

a) providing at least one recorded data set comprising information about the at least one modified feature received from at least one recorded image showing at least one part of the spectacle lens and at least one modified feature, wherein the at least one modified feature is generated from at least one original feature by a view through the at least one part of the spectacle lens, wherein at least one optical parameter of at the least one spectacle lens influences generating the at least one modified feature;

d) using the at least one recorded data set as an input for a procedure for determining a deviation between the at least one recorded data set and at least one reference data set comprising information about the at least one original feature as obtained by any one of the preceding method embodiments, whereby the at least one optical parameter of the at least one spectacle lens is determined in the procedure; and

e) outputting the at least one optical parameter of the at least one spectacle lens.

Embodiment 54. A data determining apparatus according to the preceding embodiment, wherein the processing device is configured to carry out the method of any one of embodiments 6 to 50.

Embodiment 55. A computer program comprising instructions which, when the program is executed by a computer, cause the computer to carry out the method of any one of the preceding method embodiments.

Embodiment 56. A trained machine-learning model trained in accordance with the method of any of embodiments 1 to 4 or 6 to 50.

Embodiment 57. Use of a carrier element for performing the method of any one of the preceding method embodiments, wherein the carrier element comprises a surface showing at least one original feature.

Embodiment 58. Use of a carrier element according to the preceding embodiment, wherein the surface further comprises a marked lay-on area for at least one spectacle having the at least one spectacle lens.

Embodiment 59. Use of a carrier element according to any of the two preceding embodiments, wherein the carrier element is at least one of:

- a board;
- a piece of paper; or
- a screen.

Embodiment 60. A method for producing at least one spectacle lens, wherein the producing of the at least one spectacle lens comprises processing at least one lens blank by using data related to refractive values as determined by carry out a step of

a) providing at least one recorded data set comprising information about the at least one modified feature received from at least one recorded image showing at least one part of the spectacle lens and at least one modified feature, wherein the at least one modified feature is generated from at least one original feature by a view through the at least one part of the spectacle lens, wherein at least one optical parameter of at the least one spectacle lens influences generating the at least one modified feature;

d) using the at least one recorded data set as an input for a procedure for determining a deviation between the at least one recorded data set comprising information about the at least one modified feature and at least one reference data set comprising information about the at least one original feature as obtained by any one of the preceding method embodiments, whereby the at least one optical parameter of the at least one spectacle lens is determined in the procedure; and

e) outputting the at least one optical parameter of the at least one spectacle lens.

Embodiment 61. A method for producing at least one spectacle lens according to the preceding embodiment, wherein the method is in accordance to any one of claims 6 to 50.

Short description of the Figures

Further optional features and embodiments of the present invention are disclosed in more detail in the subsequent description of preferred embodiments, preferably in conjunction with the dependent claims. Therein, the respective optional features may be realized in an isolated fashion as well as in any arbitrary feasible combination, as the skilled person will realize. It is emphasized here that the scope of the invention is not restricted by the preferred embodiments.

In the Figures:

Figure 1            illustrates a recorded image of a modified feature and an original feature;

Figure 2            illustrates an implementation of a procedure for determining a deviation between the modified feature and the original feature to determine at least one optical parameter of a spectacle lens;

Figures 3a and 3b   each illustrates a further implementation of the procedure; and

Figure 4            illustrates an image editing routing for a data set inputted into the procedure.

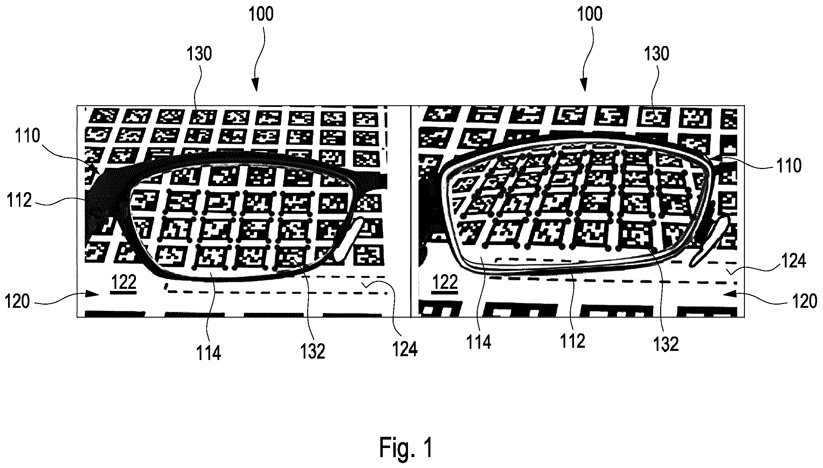

Figure 1 shows two recorded images 100 that each show a spectacle 110 of a person having a frame 112 and a spectacle lens 114. In the following the recorded images 100 on the right side is discussed .This discussion applies correspondingly to the recorded images 100 on the left side.

The frame 112 is placed on a marked lay-on area 124 of a visible surface 122 of a carrier element 120. The depicted carrier element 120 is a board. As a not depicted alternative, the carrier element 120 may be a piece of paper or a screen. An original feature 130 is printed on the surface 122 of the carrier element 120. This original feature 130 is modified by a view through the spectacle lens 114 in such a manner that the recorded image 100 shows a modified feature 132. The modified feature 132 is generated by the refraction of the spectacle lens 114. The refraction depends on the at least one optical parameter 140 of the spectacle lens 114, wherein the optical parameter 140 may be a spherical power or a cylinder power and a cylinder axis. Thus, the at least one optical parameter 140 can be determined by comparing the modified feature 132 to the original feature 130.

The spectacle lens 114 depicted in the recorded image 100 on the left side of Figure 1 has the following optical parameter 140: +2 sphere. The spectacle lens 114 in the recorded image 100 on the right side has the following optical parameter 140: -8 sphere; 2 cylinder, 30° cylinder axis. As can be seen by a comparison of both modified features 132 that are generated from the same original feature 130, the refraction of the spectacle lenses 114 causes typically an unambiguous modified pattern 130 from which the at least one optical parameter 140 can be determined.

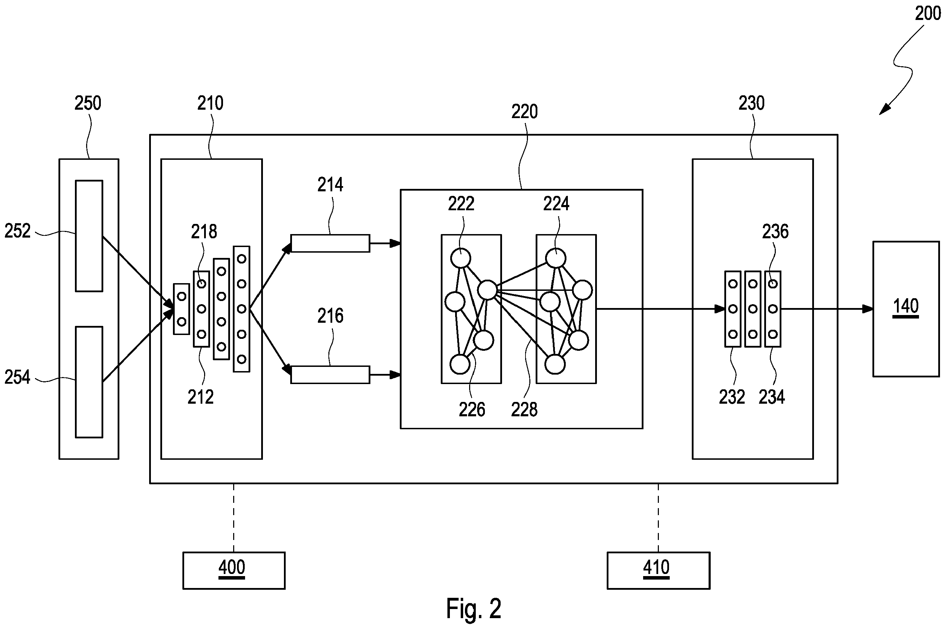

The at least one optical parameter 140 of the spectacle lens 114 is determined using a trained procedure 200 for determining a deviation between the modified feature 132 and the original feature 130 running as a computer program on a data determining apparatus 400. The procedure 200 may be considered as a trained machine learning model. The procedure 200 is depicted in Figure 2. A data set 250 is used as an input for the machine-learning model 200. In Figures 2, 3a, 3b and 4 the dataflow is generally depicted by arrows, which point from an output to an input.

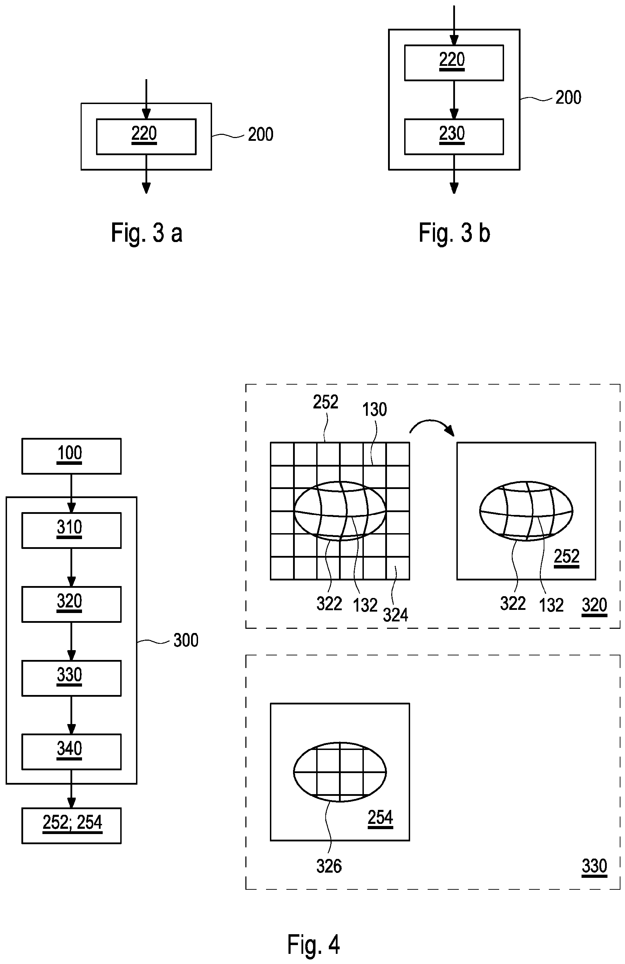

The data set 250 comprises at least a recorded data set 252 comprising information about the at least one modified feature 132. The recorded data set 252 is determined from the recorded image 100, as explained later in Figure 4. As depicted here, the data set 250 may optionally further comprise a reference data set 254 comprising information about the at least one original feature 130. The at least one recorded data set may be given in of two-dimensional pixels $m_m$ or, alternatively, in three-dimensional direction vectors $d_m$. The at least one reference data set may be given in two-dimensional pixels $m_o$ or three-dimensional direction vectors $d_o$, respectively. The recorded data set 252 may comprise information about the at least one modified feature 132 determined from two recorded images 100, showing the modified pattern 132 from different perspectives.

The procedure 200 comprises a first machine learning algorithm 210 configured to embed the information about the modified feature 132 and the information about the at least one original feature 130 independently for one another. The data set 250 is inputted into the first machine learning algorithm 210. During the embedding the information about the modified feature 132 is correlated with itself and the information about the at least one original feature 130 is also correlated with itself. The correlating involves generating an first output 214 and a second out 216, which considers an interaction between different parts of the modified feature 132 or different parts of the original feature 130. The first machine learning algorithm 210 may be implemented as a Multi-Layer Perceptron neural network with four layers 212, wherein the layers 212 have an ascending number of neurons 218 starting from the input. The first machine learning algorithm 210 generates feature vectors $f_m$ and feature vectors $f_o$ . The feature vectors $f_m$ represent information about the at least one modified feature 132. The feature vectors $f_m$ are comprised in the first output 214. The feature vectors $f_m$ represent information about the at least one original feature 130. The feature vectors $f_o$ are comprised in the second output 216. In case the recorded data set 252 is given in two dimensional pixels $m_m$ and the reference data set 254 is given in two dimensional pixels $m_o$, the feature vectors $f_m$ may be generated by embedding the two dimensional pixels $m_m$ using the first machine learning algorithm 210 and, independent form this, the feature vectors $f_o$ may be generated by embedding the two dimensional pixels $m_o$ using the first machine learning algorithm 210.

The first output 214 and the second output 216 is inputted into a second machine learning algorithm 220. The second machine learning algorithm 220 combines the information about the at least one original feature 130 and the information about the at least one modified feature 132. In that sense, information comprised in the first output 214 is correlated with the information comprised in the second output 216 and a common output is generated, which depends on both information.

The second machine learning algorithm 220 may be implemented as a graph neural network comprising two types of nodes 222, 224 for storing information and two types of edges 226, 228 for passing data comprising information between the nodes 222, 224. The first output 214 comprising information about the modified feature 132 is inputted into the first type of nodes 222 and the second output 216 comprising information about the original feature 130 is inputted into the second type of nodes 224. Therefore, the feature vectors $f_m$, are stored in the first type of nodes 222 and the feature vectors $f_o$ are stored in the second type of the nodes 224.

Data comprising information is passed between the nodes 222, 224 via the edges 226, 228 in an iterative manner. In a first iterative step the data is passed between the nodes 222, 224 of the same type via self-edges 226 and in a second iterative step the information is passed between the nodes 222, 224 of a different type via cross edges 228. Deviating from Figure 2, which has been kept simple for the sake of clarity at this point, each node 222, 224 is connected via self-edges 226 with all node 222, 224 of the same type. Further each node 222, 224 is connected via-cross edges 228 with all nodes 222, 224 of the other type. The edges 226, 228 are undirected so that the information passed between a first node 222, 224 and a second node 222, 224 that are connected via one of the edges 226, 228 can be passed from the first node 222, 224 to the second node 222, 224 and vice versa. The second machine learning algorithm 220 comprises an attention mechanism weighing the edges 222, 224. The output of the second machine learning algorithm 220 is generated by correlating the information stored in the nodes 222, 224. The information may be correlated by calculating a sum and/or calculating a mean value and/or determining a maximum value and/or determining a minimal value.

The procedure 200 further comprises a third machine learning algorithm 230 configured to perform a regression on the data read out from the second machine learning algorithm 220 for determining the at least one optical parameter 140. The output of the second machine learning algorithm 220 is inputted into the third machine learning algorithm 230. The third machine learning algorithm 230 may be implemented as a Multi-Layer Perceptron neural network. The depicted Multi-Layer Perceptron neural network has three layers 232, 234. The three layers 232, 234 have the same number of neurons 236. In particular, an output layer 234 that generates the output of the third machine learning algorithm 230 has a number neurons 236 that equals a number of the least one optical parameter 140 as each neuron 236 of the output layer outputs a different optical parameter 140. The output of the third machine learning algorithm 230 is the least one optical parameter 140.

Figure 3a shows a different architecture of the procedure 200, which comprises only the second machine learning algorithm 220. In this case the data set 250 is inputted in the second machine learning algorithm 220 and the at least one optical parameter 140 is read out from the second machine learning algorithm 220. According to Figure 3b, the procedure 200 comprises the second machine learning algorithm 220 and the third machine learning algorithm 230. Here, the data set 250 is inputted into the second machine learning algorithm 220 and the at least one optical parameter 140 is read out from the third machine learning algorithm 230.

The procedure 200 and in particular the respective first machine learning algorithm 210 and/or second machine learning algorithm 220 and/or third machine learning algorithm 230 are trained to a trained machine learning model on a data training apparatus 410. The data set 250 provided for purpose of this training further comprises the at least one optical parameter 140 as known for the at least one spectacle lens. Therefore, trainable parameter of the procedure 200 are optimized until a difference between the at least one optical parameter 140 as determined by the procedure 200 and the at least one optical parameter 140 as known is below a threshold, in particular until a parameter set is determined for which the difference is minimal. The steps a) and b) may be repeated for more than one training data set.

Before the recorded data set 252 is inputted into the procedure 200 the recorded data set 252 may be processed by an image editing routing 300 as depicted in Figure 4. Also the reference data set 254 may be processed by the image editing routing 300. For this purpose the reference image is inputted into the image editing routing 300. The recorded image 100 may be processed as recorded data set 252, wherein the recorded data set 252 comprises the pixels $m_m$.of the recorded image 100.

In a first step 310 of the image editing routing 300, the camera pose of a camera that took the at least one recorded image 100 may be determined. To determine the camera pose a part of the recorded image 100 that shows the at least one original feature 130 is weigh above a part that shows the at least one modified feature 132 by using a perspective-n-point method in combination with a random sample consensus algorithm. The camera pose is determined relative to the coordinate system of the recorded image 100. As a result of this step, a camera to world transformation

$$T_C^W = [R_C^W, X_C^W]$$

may be determined, wherein $T_C^W$ is the camera to world transformation , $R_C^W$ is the camera to world rotation and $X_C^W$ is the position of the camera in the world coordinate system.

Further at least one camera parameter of the camera may be determined. Therefore the at least one camera parameter is queried from a database; alternatively the camera may be calibrated. The camera parameter may be a camera constant and/or a principal-point location and/or at least one distortion parameter and/or an aspect ratio and/or a skew of a sensor axis. Accordingly, a camera imaging function $\pi$ is known. Any influence of the at least one camera parameter on the recorded image 100 may be compensated for.

In a second step 320, the recoded image 100 is partitioned in a relevant segment 322 and a negligible segment 324. The relevant segment 322 is a section of the recorded image 100 showing the at least one modified feature 132 due to the view through the spectacle lens 114, and the negligible segment 324 is a different section of the at least one recorded image 100 being free of the at least one modified feature 132. As a result, the at least one recorded data set 252 has only information about the relevant segment 322 of the at least one recorded image. At this point, it is possible to calculate the three-dimensional direction vectors $d_m$ as

$$d_m = N(\pi^{-1}(m_m)),$$

wherein $m_m$ is a two-dimensional pixel of the recorded image, $\pi$ is the camera imaging function and $N$ is a function that normalizes the direction vectors $d_m$, in particular to a vector length of 1.

The direction vectors $d_m$ are given the coordinate system of the camera. To make the direction vectors $d_m$ comparable to the at least one original feature 130 a transformation into the coordinate system of the at least one original feature 130 may be performed using the function

$$d_m = R_c^w d_m,$$

wherein $R_c^w$ is the camera to world rotation.

In a third step 330, the reference data set 254 may be prepared by querying information about the original feature 130 from a database. Alternatively, the information about the original feature 130 may be determined from the recorded image 100, wherein the part of the at least one original feature 130 covered by the at least one spectacle lens 114 in the at least one recorded image 100 is extrapolated from the at least one original feature 130. Further the information about the original feature 130 may be determined by using a reference image showing the at least one original feature 130. This reference image may show the at least one original feature 130 from a viewing direction vertical from above. Any influence of a camera parameter on the reference image may also be compensated for. The camera parameters may be determined in analogy to the determination of the at least one camera parameter of the camera. As a result, the three-dimensional coordinates of all observed board points $X$ corresponding to the information about the original feature 130 are known.

The perspective of the information comprised in the reference data set 254 may further be adjusted to the perspective of the information comprised in the recorded data set 252 by considering the camera pose. The information comprised in the recorded data set 252 may further be edited in such a manner that it comprises only information of a corresponding segment 326 that corresponds to the relevant segment 322.

For this the two-dimensional pixels $m_o$ may be calculated as

$$m_o = \pi ( R_w^c * X + T_w^c),$$

wherein $\pi$ is the camera imaging function, $T_w^c$ is the world to camera transformation, $R_w^c$ is the world to camera rotation and $X$ are the known three-dimensional board points. In addition or alternatively, three-dimensional direction vectors $d_o$ may be calculated as

$$d_o = N(X - X_C^W),$$

wherein $N$ is a function that normalizes the direction vectors $d_o$, in particular to a vector length of 1, $X_C^W$ is the position of the camera in the world coordinate system and X are the known 3D board points in the world coordinate system. The reference data set 254 may comprise the two-dimensional pixels $m_o$ and/or three-dimensional direction vectors $d_o$.

In a fourth step 340, the information comprised in the recorded data set 254 may be scaled by the resolution of the recorded image 100. The information comprised in the reference data set 254 may be scaled to the scale of the information comprised in the recorded data set 252. In that sense, the reference data set 254 may be scaled by the resolution of the recorded image 100 and/or the reference image.

In addition, the relevant segment 322 may be adjusted by subtracting an anchor pixel $m_a$ or an anchor direction vector $d_a$, respectively. The corresponding segment 326 is adjusted to the relevant segment 322. For this purpose, an anchor pixel $m_a$ or an anchor direction vector $d_a$, may be subtracted from the information about the corresponding segment 334, respectively.

Thus, the pixels $m_o$ and $m_m$ may be processed by functions

$$m_o = (m_o - m_a)/([w, h])$$

and

$$m_m = (m_m - m_a)/([w, h]),$$

wherein $m_a$ is an anchor pixel, w is the number of pixel columns, in particular a width of the respective image, and h is the number of pixel rows, in particular a height of the respective image, $m_o$. is a two-dimensional pixel and $m_m$. is a two-dimensional pixel.

In case the recorded data set 252 or the is reference data set 254 is given in direction vectors $d_o$ or $d_m$ the pixels $m_o$ or $m_m$ may be calculated as

$$m_o = n(d_a^T)d_o$$

and

$$m_m = n(d_a^T)d_m,$$

where n is a function by which the direction vectors $d_o$ and $d_m$ are projected in a local tangential plane and $d_a$ is the anchor direction vector.

The anchor pixel $m_a$ may be a center pixel or the anchor direction vector $d_a$ may be a center direction vector of the relevant segment or the corresponding segment, respectively. The anchor pixel $m_a$ may be calculated as

$$m_a = \frac{\sum m_i}{N},$$

wherein $m_i$ refers to the two-dimensional pixels $m_o$ or $m_m$ and $N$ is the total count of the respective pixels. The anchor direction vector $d_a$ may be calculated as

$$d_a = \frac{\sum d_i}{N},$$

wherein $d_i$ refers to the two-dimensional pixels $d_o$ or $d_m$ and $N$ is the total count of the respective pixels.

After the fourth step 340 has been completed, the recorded data set 252 and, optionally, the reference data set 254 may be outputted.

List of Reference Signs

| | |
|---|---|
| 100 | recorded image |
| 110 | spectacle |
| 112 | frame |
| 114 | spectacle lens |
| 120 | carrier element |
| 122 | surface |
| 124 | marked lay on-area |
| 130 | original feature |
| 132 | modified feature |
| 140 | optical parameter |
| 200 | procedure |
| 210 | first machine learning algorithm |
| 212 | layer |
| 214 | first output |
| 216 | second output |
| 218 | neuron |
| 220 | second machine learning algorithm |
| 222 | node of first type |
| 224 | node of second type |
| 226 | self-edges |
| 228 | cross-edges |
| 230 | third machine learning algorithm |
| 232 | layer |
| 234 | output layer |
| 236 | neuron |
| 250 | data set |
| 252 | recorded data set |
| 254 | reference data set |
| 300 | image editing routine |
| 310 | first step |
| 320 | second step |
| 322 | relevant segment |
| 324 | negligible segment |
| 326 | corresponding segment |
| 330 | third step |
| 340 | fourth step |
| 400 | data determining apparatus |
| 410 | data training apparatus |

**Claims**

1. A computer-implemented method for a training of a computer-implemented method for determining at least one optical parameter (140) of at least one spectacle lens (114), wherein the method comprises the steps of:

  a) providing at least one recorded data set (252) comprising information about the at least one modified feature (132) received from at least one recorded image (100) showing at least one part of the spectacle lens (114) and at least one modified feature (132), wherein the at least one modified feature (132) is generated from at least one original feature (130) by a view through the at least one part of the spectacle lens (114), wherein at least one optical parameter (140) of at the least one spectacle lens (114) influences generating the at least one modified feature (132); and

  b) using the at least one recorded data set (252) as an input for a procedure (200) for determining a deviation between the at least one recorded data set (252) and at least one reference data set (254) comprising information about the at least one original feature (130), wherein the procedure uses at least one machine learning algorithm (220), wherein the at least one machine learning algorithm is trained by comparing the at least one modified feature (132) to the at least one original feature (130) or the at least one original feature (130) to the at least one modified feature (132), whereby the at least one optical parameter (140) of the at least one spectacle lens (114) is determined in the procedure (200); and

c) repeating steps a) and b) until a difference between the at least one optical parameter (140) as determined for the at least one spectacle lens (114) and the at least one optical parameter (140) as known for the at least one spectacle lens (114) is below a threshold, whereby the procedure (200) for determining the deviation between the at least one recorded data set (252) and the at least one reference data set (254) is obtained and applicable in the computer-implemented method for determining the at least one optical parameter (140) of the at least one spectacle lens (114),

**characterized in that** the at least one machine learning algorithm (220) is configured to combine the information about the at least one original feature (130) and the information about the at least one modified feature (132).

2. The method according to the preceding claim, wherein combining the information about the at least one original feature (130) and the information about the at least one modified feature (132) comprises correlating the information about the at least one modified feature (132) comprised by the at least one recorded data set (252) and the information about the at least one original feature (130) comprised by the at least one reference data set (254), wherein correlating comprises a mutual interaction of both information, which is implemented in such a manner that the interaction generates an output data comprising the information about the at least one modified feature (132) and the information about the at least one original feature (130).

3. A computer-implemented method for determining at least one optical parameter (140) of at least one spectacle lens (114), wherein the method comprises the steps of:

a) providing at least one recorded data set (252) comprising information about the at least one modified feature (132) received from at least one recorded image (100) showing at least one part of the spectacle lens (114) and at least one modified feature (132), wherein the at least one modified feature (132) is generated from at least one original feature (130) by a view through the at least one part of the spectacle lens (114), wherein at least one optical parameter (140) of at the least one spectacle lens (114) influences generating the at least one modified feature (132); and

d) using the at least one recorded data set (252) as an input for a procedure (200) for determining a deviation between the at least one recorded data set (252) and at least one reference data set (254) comprising information about the at least one original feature (130) as obtained by any one of the preceding claims, whereby the at least one optical parameter (140) of the at least one spectacle lens (114) is determined in the procedure (200); and

e) outputting the at least one optical parameter (140) of the at least one spectacle lens (114).

4. The method according to any one of the preceding claims, wherein the information about the at least one original feature (130) and the information about the at least one modified feature (132) are adapted to one another by at least one of:

- scaling the information about the at least one original feature (130) to a scaling of the information about the at least one modified feature (132), or vice versa;
- adjusting a segment of the information about the at least one original feature (130) to a section of the information about the at least one modified feature (132), or vice versa;
- adjusting a perspective of the information about the at least one original feature (130) to a perspective of the information about the at least one modified feature (132), or vice versa; or
- editing the information about the at least one original feature (130) or the information about the at least one modified feature (132) by considering at least one camera parameter;

5. The method according to any one of the preceding claims, wherein the procedure (200) for determining a deviation between the at least one modified feature (132) and the at least one original feature (130) uses a first machine learning algorithm (210) configured to embed the information about the at least one modified feature (132) and the information about the at least one original feature (130).

6. The method according to any one of the preceding claims, wherein the at least one machine learning algorithm (220) configured to combine the information about the at least one original feature (130) and the information about the at least one modified feature (132) is a second machine learning algorithm (220), wherein the second machine learning algorithm (220) is implemented as at least one of:

- a graph neural network, wherein the graph neural network comprises nodes (222, 224) for storing information and edges (226, 228) for passing information between the nodes (222, 224); or
- a recurrent neural network.

7. The method according to the preceding claim, wherein the second machine learning algorithm (220) comprises an attention mechanism weighing the edges.

8. The method according to any one of the preceding claims, wherein the procedure (200) for determining a deviation between the at least one modified feature (132) and the at least one original feature (130) uses a third machine learning algorithm (230) configured to perform a regression for determining the at least one optical parameter (140).

9. The method according to any one of the preceding claims, wherein the at least one optical parameter (140) is at least one of:

- a spherical power; or
- a cylinder power and an cylinder axis.

10. A data training apparatus for a training of a process for determining at least one optical parameter (140) of at least one spectacle lens (114), wherein the data training apparatus is configured to carry out a computer-implemented method for a training of a computer-implemented method for determining at least one optical parameter (140) of at least one spectacle lens (114) comprising the steps:

a) providing at least one recorded data set (252) comprising information about the at least one modified feature (132) received from at least one recorded image (100) showing at least one part of the spectacle lens (114) and at least one modified feature (132), wherein the at least one modified feature (132) is generated from at least one original feature (130) by a view through the at least one part of the spectacle lens (114), wherein at least one optical parameter (140) of at the least one spectacle lens (114) influences generating the at least one modified feature (132); and
b) using the at least one recorded data (252) set as an input for a procedure (200) for determining a deviation between the at least one recorded data set (252) and at least one reference data set (254) comprising information about the at least one original feature (130), wherein the procedure uses at least one machine learning algorithm (220), wherein the at least one machine learning algorithm is trained by comparing the at least one modified feature (132) to the at least one original feature (130) or the at least one original feature (130) to the at least one modified feature (132), whereby the at least one optical parameter (140) of the at least one spectacle lens (114) is determined in the procedure (200); and
c) repeating steps a) and b) until a difference between the at least one optical parameter (140) as determined for the at least one spectacle lens (114) and the at least one optical parameter (140) as known for the at least one spectacle lens (114) is below a threshold, whereby the procedure (200) for determining the deviation between the at least one recorded data set (252) and the at least one reference data set (254) is obtained and applicable in the computer-implemented method for determining the at least one optical parameter (140) of the at least one spectacle lens (114);

**characterized in that** the at least one machine learning algorithm (220) is configured to combine the information about the at least one original feature (130) and the information about the at least one modified feature (132).

11. A data determining apparatus for determining at least one optical parameter (140) of at least one spectacle lens (114), wherein the data determining apparatus is configured to carry out a computer-implemented method for determining at least one optical parameter (140) of at least one spectacle lens (114) comprising the steps of:

a) providing at least one recorded data set (252) comprising information about the at least one modified feature (132) received from at least one recorded image (100) showing at least one part of the spectacle lens (114) and at least one modified feature (132), wherein the at least one modified feature (132) is generated from at least one original feature (130) by a view through the at least one part of the spectacle lens (114), wherein at least one optical parameter (140) of at the least one spectacle lens (114) influences generating the at least one modified feature (132); and
d) using the at least one recorded data set (252) as an input for a procedure (200) for determining a deviation between the at least one recorded data set (252) and at least one reference data set (254) comprising information about the at least one original feature (130) as obtained by any one of the preceding method claims, whereby the at least one optical parameter (140) of the at least one spectacle lens (114) is determined in the procedure (200); and

e) outputting the at least one optical parameter (140) of the at least one spectacle lens (114).

12. A computer program comprising instructions which, when the program is executed by a computer, cause the computer to carry out the method of any one of the preceding method claims.

13. A trained machine learning model trained in accordance with the method of any one of claims 1, 2 or 4 to 9.

14. Use of a carrier element (120) for performing the method of any one of the preceding method embodiments, wherein the carrier element (120) comprises a surface (122) showing at least one original feature (130).

15. A method for producing at least one spectacle lens (114), wherein the producing of the at least one spectacle lens (114) comprises processing at least one lens blank by using data related to refractive values as determined by carry out a step of

a) providing at least one recorded image data set (252) comprising information about the at least one modified feature (132) received from at least one recorded image (100) showing at least one part of the spectacle lens (114) and at least one modified feature (132), wherein the at least one modified feature (132) is generated from at least one original feature (130) by a view through the at least one part of the spectacle lens (114), wherein at least one optical parameter (140) of at the least one spectacle lens (114) influences generating the at least one modified feature (132); and

d) using the at least one recorded data set (252) as an input for a procedure (200) for determining a deviation between the at least one recorded data set (252) and at least one reference data set (254) comprising information about the at least one original feature (130) as obtained by any one of the preceding claims, whereby the at least one optical parameter (140) of the at least one spectacle lens (114) is determined in the procedure (200); and

e) outputting the at least one optical parameter (140) of the at least one spectacle lens (114).

Fig. 1

EP 4 202 869 A1

Fig. 2

Fig. 3 a

Fig. 3 b

Fig. 4

Europäisches
Patentamt

European
Patent Office

Office européen
des brevets

# EUROPEAN SEARCH REPORT

**Application Number**

EP 21 21 6738

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/382329 A1 (OHLENDORF ARNE [DE] ET AL) 9 December 2021 (2021-12-09) * paragraphs [0053], [0054], [0060], [0173], [0176], [0158], [0160], [0065] * ----- | 1-15 | INV. G06V40/19 G06V10/82 |
| A | WO 2021/140204 A1 (ESSILOR INT [FR]) 15 July 2021 (2021-07-15) * page 8, line 19 – line 24 * ----- | 1-15 | |

**TECHNICAL FIELDS SEARCHED (IPC)**

G06V

The present search report has been drawn up for all claims

| Place of search | Date of completion of the search | Examiner |
|---|---|---|
| The Hague | 30 May 2022 | Stan, Johann |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 21 6738

This annex lists the patent family members relating to the patent documents cited in the above-mentioned European search report.
The members are as contained in the European Patent Office EDP file on
The European Patent Office is in no way liable for these particulars which are merely given for the purpose of information.

30-05-2022

| Patent document cited in search report | | Publication date | Patent family member(s) | | Publication date |
|---|---|---|---|---|---|
| US 2021382329 | A1 | 09-12-2021 | CN 113678055 | A | 19-11-2021 |
| | | | EP 3730998 | A1 | 28-10-2020 |
| | | | EP 3956721 | A1 | 23-02-2022 |
| | | | US 2021382329 | A1 | 09-12-2021 |
| | | | WO 2020216788 | A1 | 29-10-2020 |
| WO 2021140204 | A1 | 15-07-2021 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2017174791 A1

- WO 2020216788 A1

### Non-patent literature cited in the description

- **SARLIN, PAUL-EDOUARD et al.** Superglue: Learning feature matching with graph neural networks. *Proceedings of the IEEE/CVF conference on computer vision and pattern recognition,* 2020

- **A COMPREHENSIVE SURVEY ON GRAPH NEURAL NETWORKS ; WU, ZONGHAN et al.** *IEEE transactions on neural networks and learning systems,* 2020
- **VASWANI, ASHISH et al.** Attention is all you need. *arXiv: 1706.03762,* 2017